# EUROPEAN PATENT APPLICATION

(11) **EP 1 080 748 A1**
(43) Date of publication of application: **07.03.2001**
(21) Application number: 00910880.4
(22) Date of filing: 21.03.2000
(51) Int. Cl.: A63B 69/22, A63B 69/32, G01P 15/13

(54) **IMPROVEMENTS TO THE CONSTRUCTION OF VIDEO GAMES**

(30) Priority: 26.03.1999 ES 9900699
(71) Applicant: Gaelco, S.A., 08023 Barcelona (ES)
(72) Inventor: GORDILLO MARIN, Alberto, E-08023 Barcelona (ES); GUARDIA SANSALVADO, Jose Maria, E-08023 Barcelona (ES)
(74) Representative: Canela Giménez, Teresa
(86) International application number: ES0000094
(87) International publication number: WO0057966

(57) **Abstract**

The subject of the present patent is improvements in the construction of video games of the type having a resilient body for receiving an actual impact effected by a player, characterized in that the body to be struck is above the surface of the playing area and is attached to an upright element having a projecting upper end cranked at right angles and having its tip inserted in the actual body which receives the impact effected by the player, there being disposed inside the cranked end a module carrying a displaceable transducer which detects the reactions of impacts against the actual body attached to the vertical upright support which, by means of suitable connections, transfers an indication of the inclinations brought about by the movement of the body to the transducer the accelerometers of which convert them into analog/digital signals and send them to the CPU.

## Description

The subject of the present invention is improvements in the construction of video games of the type which simulate the reactions of a body to blows, the reactions being generated on a screen by means of the corresponding C.P.U.

The invention relates to the field of video games and graphic simulators and, more specifically, to the field of sports simulators.

Devices for measuring the force of impact of a blow delivered by the fist (punching ball) or by a hammer or other blunt object have existed for a long time. More recently devices have appeared which can be struck by the foot and which, like the previous ones, measure only the force of the impact received.

In recent years, recreational machines which incorporate a system for detecting the approximate force and direction of a conventional football have started to be marketed but their operating principle is based on a surface arranged as a matrix by means of detectors of pressure or infra-red rays (touch screen), so that a football or other object to be struck has to strike the surface, otherwise no signal is obtained.

The application of the improvements of the invention enables some novel autonomous devices to be produced since, owing to their constructional arrangement, they do not require the matrix surface with the detectors of pressure or infra-red rays located underneath it but, on the contrary, the body to be struck is raised above the surface of the playing area and lacks pressure or infra-red ray detectors.

The improvements which are the subject of the invention permit the production of video games machines which fulfil some requirements imposed by the operating environment. The device is simple, reliable, inexpensive, and easy to maintain and the electronic portion which it incorporates is of very low power. With the subject of the invention, an independent device is obtained which does not require a striking surface, and the object struck thus remains firmly fixed to the device which measures the intensity of the blow and its direction.

For a correct interpretation, a practical embodiment of the invention is described by way of non-limiting example below, there being appended two sheets of drawings, in which:

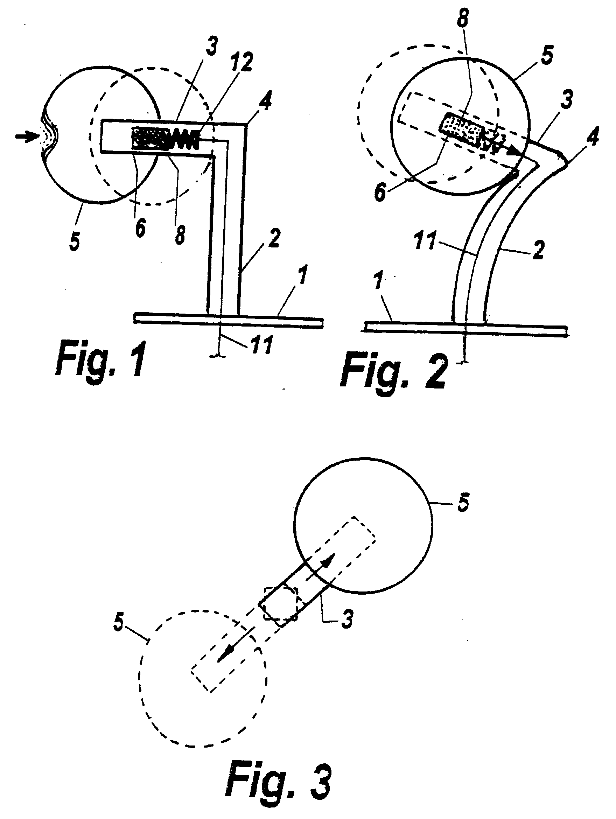

Figures 1 and 2 show schematically an upright element in two distinct positions of the many positions which the upright element can adopt momentarily.

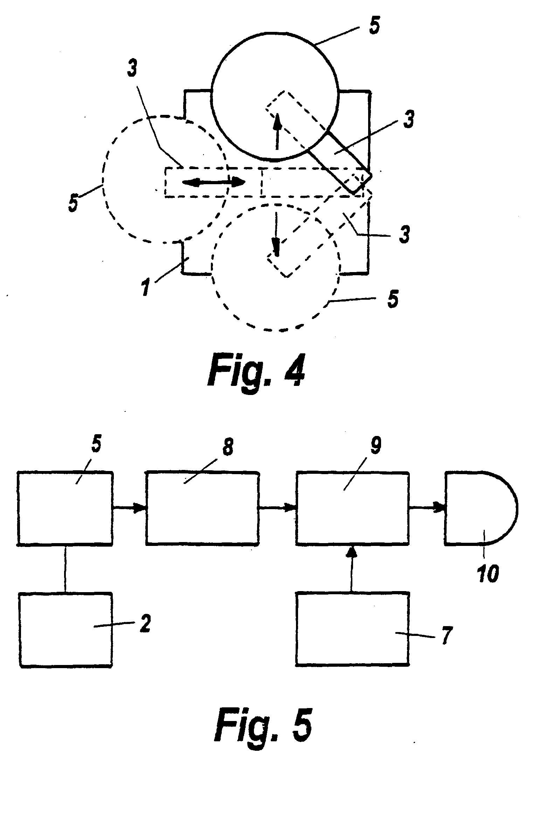

Figures 3 and 4 are respective plan views of momentary variations of the position of the upright element of Figures 1 and 2.
Figure 5 shows an electronic layout to which the upright element included in the subject of the invention is connected.

The invention consists in that, in order to simulate the reaction of a resilient body to being struck, a flexible upright shaft (2) is placed at least at a desired point of the playing area (1) and is joined at its foot to the playing surface (1), the shaft (2) extending vertically from the surface of the playing area (1) and a projecting, hollow, upper portion (3) thereof, with or without a crank (4), carrying a projecting, preferably spherical and resilient body (5), fitted thereon.

Inside the hollow cranked end (3) there is a cylindrical weighing module (6) which is free to perform a rotary movement about itself and also a lateral displacement movement inside the hollow cranked end (3) of the upright shaft (2) itself, and in which transducers (8) are disposed.

The actual body (5) which receives the actual impact is resilient and capable of absorbing, by momentary deformation, a portion of the energy supplied by the blow executed directly or indirectly by the player playing. This momentary deformation is transmitted to the flexible support (2) and the reaction produced is displayed in simulated form on a computer screen (10) by means of corresponding software (7), transducer (8), and CPU (9).

The upright shaft (2) has three distinct arcuate movements of inclination about itself and they are intimately reported to a logic board by means of an electrical wire (11) in contact with the cylindrical module (6) of the transducers (8), the CPU (9) of the logic board (12) and the computer screen (10).

The module (6) of the transducers (8) is situated with freedom of displacement and rotary movement about itself, inside the cranked end (3) of the upright support (2), the transducer (8) being composed of a set of accelerometers which detect the resilient reaction of the head (5) actually struck, in any of the three possible directions of the axes of the external resilient head (5), the transducer registering the reactions produced by the actual resilient body (5) upon being deformed temporarily by the force of the blow received and, once they have been picked up by the transducer and processed by the software (7) of the logic board, transmitting them to the CPU (9) in order for them to appear on the computer screen (10) in the form of a body with simulated movements.

The intensity of the blow, in whatever direction it is produced, is also simultaneously detected.

If necessary, a helical spring (12) is fitted inside the chamber for the internal displacement of the module (6) holding the accelerometers (8), between the module (6) and an appropriate end wall of the chamber, the spring (12) performing an opposing thrusting action by reacting against the accelerometer module.

The signal obtained by the transducers (accelerometers or other equivalent transducers) is subjected to conditioning and analog/digital conversion in order to achieve specific tasks of generating interactive images in three dimensions and in real time, for video games and graphic simulators, and is sent to the CPU (9) by means of the suitable electronic circuit disposed in the logic board of the computer in order for the series of signals, converted in their analog and digital aspects, to appear in visual form on the computer screen (10) once they have been processed by the appropriate software.

With the configuration of the embodiment described, it is possible to display on the screen the simulated displacement movements of a resilient body which is an imitation of the actual body, these movements being produced by the reaction of the actual resilient body and with a speed proportional to the actual blow received, executed directly or indirectly by the player playing, the resilient body being disposed on the cranked end of the appropriate upright element projecting from the surface of the playing area so that a matrix surface with detectors of pressure or infra-red rays is not required in the invention.

The actual resilient object struck thus remains firmly fixed to the electronic device described, which measures the reaction produced by the intensity of the blow, and the direction of the impact, and its reactions are reflected in the simulated moving body which appears on the screen.

Naturally, details of construction and finishing which do not alter, change or modify the essence of the invention will be variable in this case.

## Claims

1. Improvements in the construction of video games of the type having a resilient body for receiving the actual impact effected directly by the player playing, characterized in that the actual resilient body to be struck is situated above the surface of the playing area and is attached to an upright element fixed vertically to the surface at one end, the vertical upright element having a projecting upper end, preferably cranked at right angles, and with its tip fitted permanently in the actual resilient, preferably spherical, body which receives the impact of the actual blow effected directly or indirectly by the player playing, a weighing module being disposed inside the cranked, raised end with freedom to perform lateral displacements and rotary movements about itself, the weighing module carrying a displaceable transducer which detects the reactions to frontal and lateral impacts and upward or downward blows against the outer surface of the actual resilient body attached to the vertical upright support which, by its inclinations brought about by the movement of the actual resilient body disposed on the cranked, raised end, and by means of suitable connection, transfers an indication of the reactions generated by the actual resilient body to the transducer inside which the accelerometers condition the indications and convert them into analog/digital signals before sending them, by means of a suitable circuit, to the CPU in order for them to appear on the computer screen with simulated movements of a moving body, also simulated, and in accordance with the series of actual reactions of the actual resilient body suffering the impact.

2. Improvements in the construction of video games according to the preceding claim, characterized in that, if necessary, a helical spring is disposed inside the sliding chamber of the projecting end of the upright support fixed by one end to the playing surface, in order to urge the weighing module carrying the transducers in the reverse direction.
